# EUROPEAN PATENT APPLICATION

(11) **EP 4 269 913 A1**
(43) Date of publication of application: **01.11.2023**
(21) Application number: 22382401.2
(22) Date of filing: 27.04.2022
(51) Int. Cl.: F25D 11/00, F25D 17/06, F25D 29/00, A23B 4/06

(54) **MACHINE FOR SUPERCOOLING FOOD AND BEVERAGES AT TEMPERATURES BELOW ZERO DEGREES CELSIUS WITHOUT CRYSTALLIZATION**

(71) Applicant: Preket, S.L., 46003 Valencia (ES)
(72) Inventor: MARTINEZ MARTINEZ, Jose Ignacio, 46010 Valencia (ES)
(74) Representative: De Castro Hermida, José Luis

(57) **Abstract**

Machine for supercooling food and beverages at temperatures below zero degrees Celsius without crystallization, that is, at temperatures below its freezing point; without these products crystallizing or changing phase and losing part of their organoleptic properties, simply with the oscillation of temperature and where its constant fluctuation allows reaching temperatures in the order of up to -20°C in periodic operating cycles

## Description

### Object of the invention

The object of this specification is a machine for supercooling food and/or beverages at temperatures below zero degrees Celsius without crystallization, that is, at temperatures below its freezing point; without said products crystallizing or changing phase and losing part of their organoleptic properties.

It is applicable under any format, be it cabinet, undercounter, back bar, cold-holding table, chest, etc. It is also applicable in a partitionable cold room, an isothermal container, etc.

### Background of the invention

Currently, in the field of hospitality, various refrigeration machines are known that work at different temperature ranges for the maintenance and/or preservation of food or beverages, which are widely established in the sector.

The problem with this type of conventional solutions is that they work at such temperature ranges that for the cooling or freezing of the products stored in them, they require a long time and, in turn, a large energy consumption.

An example of this is the Korean patent KR101933588, also published as international application WO2019103312, which describes a supercooling freezer for liquids capable of selective supercooling, in which when a sensor detects a decrease in the number of objects received in a space enabled, objects received in another space that is not in operation are supercooled.

Patent EP1878986 discloses a method of performing the cooling comprising a heater to produce temperature variations inside the chamber that help stabilize the temperature. This patent is considered the closest in the state of the art.

To achieve this purpose, the Korean patent uses an algorithm that generates a periodic mechanical vibration with which it manages to avoid the phase change to solid of liquids at temperatures below the freezing point. However, it fails to prevent the crystallization of the water contained in the food.

US2018180353 is also known, which discloses a method for supercooling products that monitors when crystallization occurs in order to notify the user about the need to remove it.

### Object of the invention

The technical problem that the present invention solves is to achieve a machine capable of supercooling a food or beverage at temperatures below zero, quickly and easily, preventing said food or beverage from crystallizing. For this, the machine for supercooling food and beverages at temperatures below zero degrees Celsius without crystallization, object of the present invention, comprises a frame that houses a cooling chamber therein, to preserve food or beverages, closed by one or more doors. The equipment is based on a mechanical compression system preferably with R290 coolant (propane).

This machine also comprises some first extraction fans configured to ensure that all the products reach the same temperature, in addition to extracting or adding humidity to the chamber. The extraction fans take the cooling air, whose temperature has been reduced in the evaporator, and move it through the cooling chamber. These extraction fans can also vary the humidity in the cooling room, depending on whether the compressor is running or not. This compressor can prepare the humidity reduction while the extraction fans are not running.

It also has some second blower fans configured to ensure the homogenization of the temperature inside the cooling chamber. The two types of fans will be activated independently, as will be described later. The chamber comprises an air channelling device configured to uniformly distribute the temperature and circulating humidity inside the cooling chamber. The channelling device is close (4 cm in a 50 cm chamber) to a wall of the cooling chamber, usually the bottom, and the blower fans introduce the air between the channelling device and the wall. The channelling device has perforations or air outlets at the height of the shelves, so that the section of the outlet on each side of each shelf is different. Likewise, the further away from the fans, the longer the lateral area with more section.

As an important part of the invention, the channelling device or other equipment ensures high homogeneity of the cooling air currents produced by the blower fans, so that their flowrate, at every point in the cooling chamber, is between 0.2 and 2 m/s when the blower fans are running and working.

Helical fans direct the flow to a greater extent on one side, so it is necessary to vary the section of the channelling device perforations on both sides so that the flow is similar. It is also possible, although less preferred, to include elements that increase the pressure drop on one side of the channelling device, so that the perforations can be more similar.

The flow of air that passes through the interior of this channelling device encounters a difficulty (non-perforated part) for its exit to the chamber and it is through the perforations that the homogeneity of the air that transmits temperature and relative humidity is achieved.

Thanks to its design, and to the control means that command the machine, the internal temperature of the chamber will be controlled by receiving data from the placed temperature probes, and circulating the air inside, obtaining products at a uniform temperature throughout the chamber.

The present invention achieves supercooling of food and beverages simply by oscillating the temperature and where its constant fluctuation allows reaching temperatures in the order of up to -20°C in periodic operating cycles, avoiding the crystallization of food and beverages. The minimum temperature reachable without crystallization will depend on the type of product.

The method of using the machine herein recommended will allow a beverage to be quickly obtained below 0°C, which makes it easier for restaurant premises that use said invention to have a stable stock of cold beverages, even at times of large crowds within the premises.

Another advantage of the machine herein recommended, compared to the competition, is the fact that it is not simply designed for beverages like other similar inventions, but rather, thanks to the design and implementation of its method of use, it can be used for all types of food, without losing their qualities in terms of flavour or texture, and prolonging shelf life thereof, which will provide greater versatility in the menu for restaurants that use the invention.

For all these reasons, the machine herein recommended will be able to work in temperature ranges between +6°C and -22°C; thus achieving supercooling without crystallization quickly and safely; in the case of food, with a maximum supercooling limit of -6°C; in the case of non-alcoholic beverages up to -8°C, and in the case of low-alcohol beverages up to -14°C.

Throughout the description and claims the word "comprises" and its variants are not intended to exclude other technical characteristics, additives, components, or steps. Other objects, advantages and features of the invention will be apparent to those skilled in the art in part from the description and in part from the practice of the invention. The following examples and drawings are provided by way of illustration and are not intended to limit the present invention. Furthermore, the present invention covers all possible combinations of particular and preferred embodiments indicated herein.

### Description of the figures

Next, a series of drawings that help to better understand the invention and that are expressly related to an embodiment of said invention that is presented as a non-limiting example thereof are described very briefly.
- FIG 1.: Shows a perspective view of an example of the machine for supercooling food and beverages at temperatures below zero degrees Celsius without crystallization, object of the present invention.
- FIG 2.: Shows a rear view of an example of the machine for supercooling food and beverages at temperatures below zero degrees Celsius without crystallization.
- FIG 3.: Shows a sectional view of an example of the machine for supercooling food and beverages at temperatures below zero degrees Celsius without crystallization.
- FIG 4.: Shows an exploded view of another example of the machine for supercooling food and beverages at temperatures below zero degrees Celsius without crystallization.

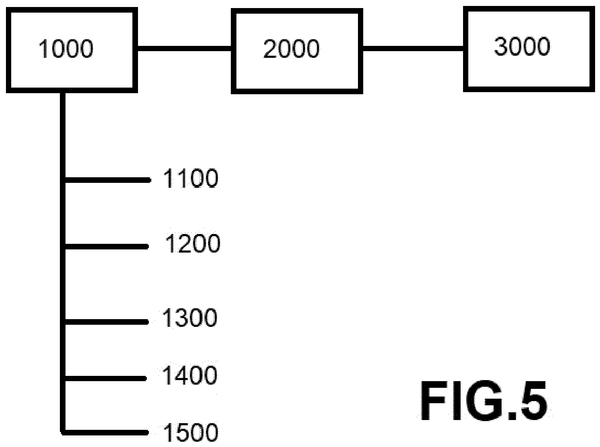

- FIG 5.: Shows a flowchart of an operating mode of the machine for supercooling food and beverages at temperatures below zero degrees Celsius without crystallization, object of the present invention.

### Detailed description of the invention

A preferred embodiment of the invention is shown in the attached figures. More specifically, the machine for supercooling below zero degrees Celsius, object of the present invention, is characterized in that it comprises a frame (100) with a series of legs, in this case with wheels (1), and where a drain (3) closed with a plug (2) is arranged. In the internal housing of the frame (100) it is defined as a cooling chamber (101). The cooling chamber (101) is linked to an electrical resistor (4) configured to prevent freezing and/or hardening of the weatherstrip (49) of the glass door (48). The electrical resistor (4) is attached to the glass door (48) by means of hinges (5,6). On the other hand, the frame (100) houses the axis (7) of the glass door (48) and a first temperature probe (23a) capable of meeting the temperature ranges required by the machine of the invention, for example a reading range of -50°C to +105°C.

In the upper part of the machine shown is housed the control panel (11), which can also be in the lower part, on one side... These controls are essentially made up of a switched microswitch (8) that allows the control of fans (34a, 34b), as well as the lighting of the glass door (48) opening that is activated when the door is opened or that can be kept on, thereby optimizing the operation and performance of the whole machine. The control panel (11) can also include a lock (9) that prevents its manipulation; a thermostat (10) with at least six different settings for the correct control of temperature and humidity inside the machine; electrical connection means (13) with cable grommets (14); and, finally, a union hinge (12) with the lid (15) and other optional elements or accessories.

In this embodiment, in its rear part, the frame (100) incorporates a cooling condenser (16), which is protected by a protection grille (17) against inadvertent contact with the propeller of the fan (19) of the condenser (16). In said rear part of the frame (100) there is also a high-efficiency compressor (18) with natural coolant gas; an expander element (21); a dehydrating filter (22) for hydrocarbon gases and finally a second temperature probe (23b) configured to measure the temperature in the cooling condenser (16), for example with a reading range of -50°C to +105°C. The machine is designed to stop the whole machine in the event of detecting high temperatures in the condenser (16), allowing short periods of operation for keeping the food at a cooling temperature (between 0 and +4 °C) and thus being able to preserve them. An alarm of high temperature of the condenser (16) can be included. Logically, these elements are electrically powered by means designed for this purpose (20).

In a space enabled inside the frame (100), that is, in the cooling chamber (101) itself, lighting means (25) connected to a transformer (24) together with a tube cover (26) are located; and in turn, an automatic evaporation pipe (28) associated with a tray (27) is housed.

The frame (100) also incorporates inside an evaporator (31) protected by anticorrosive paint and designed to dissipate 100% of the cold generated by means of a fin designed to work in freezing cycles and with an adapted format to take advantage of the flow of air produced by the fans (34a, 34b). The evaporator (31) is connected to a third temperature probe (23c), for example also with a reading range of -50°C to +105°C and designed to manage the final defrost temperature and the fan activation temperature (34a, 34b). Inside the cooling chamber (101) there is also a high-power defrost resistor (29) to minimize defrost time and the rapid evacuation of humidity from the product in the form of water to the outside of the cooling chamber (101); a thermal fuse (30) that cuts off the electrical supply to the resistor (29) in the event that it remains active due to the failure of any component. The thermal fuse (30) has a cut-off range of 50°C and a starting range of 35°C; all that is protected by a cover (35).

The evaporator (31) also allows humidity to be extracted from the cooling chamber (101) by reducing the temperature below the dew point. If the modification of the temperature is not desired but only the removal of humidity, heat can also be recovered from the compressor (18).

Next, a drain resistor (32) designed to prevent the channelling drain pipe (33) from freezing is placed.

Finally, the frame (100) houses some first extraction fans (34a) that provide the necessary flow for the different applications protected by a cover (36) that provides protection against direct contacts and that, in turn, provides the optimal inclination to the extraction fans (34a) for the supply or extraction of humidity and/or temperature in the different steps of operation. The frame (100) also houses some second blower fans (34b) that provide the necessary flow for the different applications, where said blower fans (34b) are protected by a cover (37) under which the blower fans (34b) are located and has an optimal inclination for the recirculation of air in the cooling chamber (101); the assembly formed by the cover (37) and the blower fans (34b) is reinforced by a protection (38) that prevents direct contacts. The back or rear part of the frame (100) also includes an air channelling device (39) that evenly distributes the temperature and humidity that circulates through the cooling chamber (101). The channelling device (39) is associated with a probe protector (40) to prevent the manipulation of the first temperature probe (23a) or its damage due to hits.

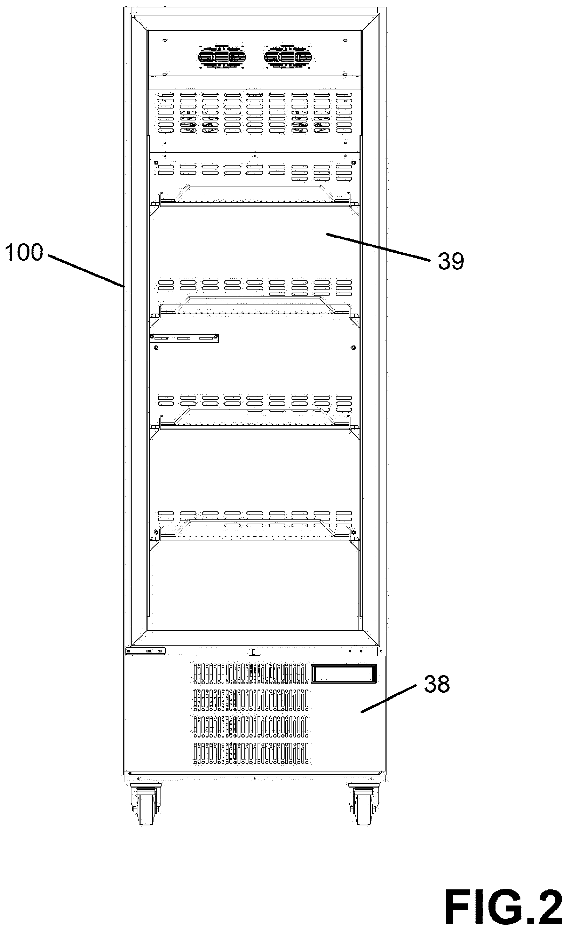

The channelling device (39) is close to a wall of the cooling chamber (101), normally the bottom, and the blower fans (34b) introduce the air between the channelling device (39) and the wall. The channelling device (39) has perforations (391) or air outlets at the height of the shelves, so that the section of the outlet on each side of each shelf is different. Similarly, and as can be seen especially in Figure 2, the further away from the blower fans (34b), the longer the lateral area with more section.

In the cooling chamber (101) are located a series of guides (41) with a support (42) for the various shelves or racks (43) where beverages or food will be placed for cooling.

Finally, the frame (100) of the figures will be closed and sealed by including a glass door (48) with a handle (50) and a weatherstrip (49) with a high degree of insulation against abnormal environmental conditions, made up of a triple glazing, two low emission thermal emission films and two argon chambers between the three glasses. In the case of the solid door (48), it is connected to the weatherstrip (49), torsion hinge (45) and a spring housing box (47) that will dampen its opening.

In a particular embodiment, there are at least two fans (34a, 34b) for each application: extraction and blowing. And in models higher in volume there may be four or even five ventilation units.

The machine as a whole will be controlled by logical control means that incorporate a program or software that will control the correct operation of all the electromechanical elements that make up the machine. More specifically, the control logic means comprise a processor or processors and a memory or memories where the program or programs are stored, consisting of a series of instructions that, when executed by the processor or processors, cause the machine to execute the supercooling method described below.

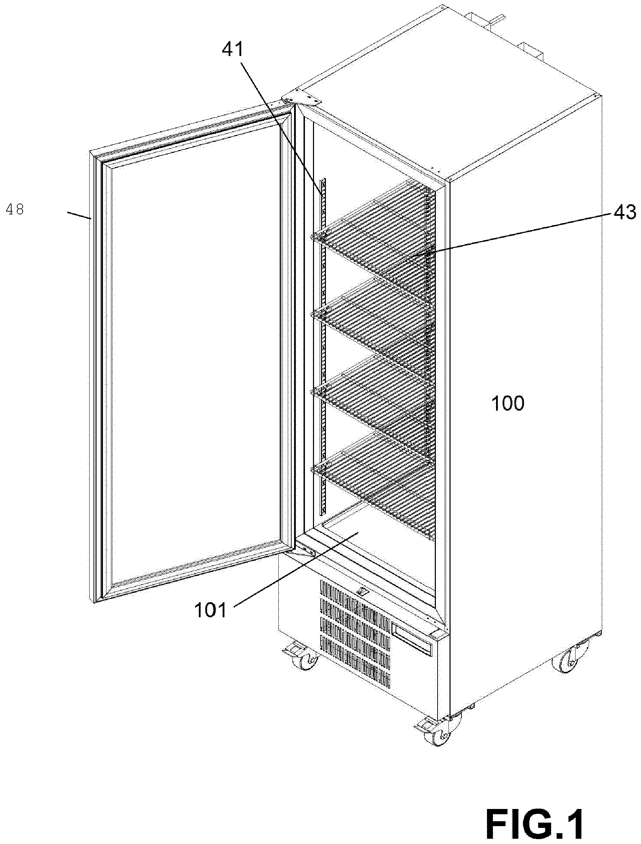

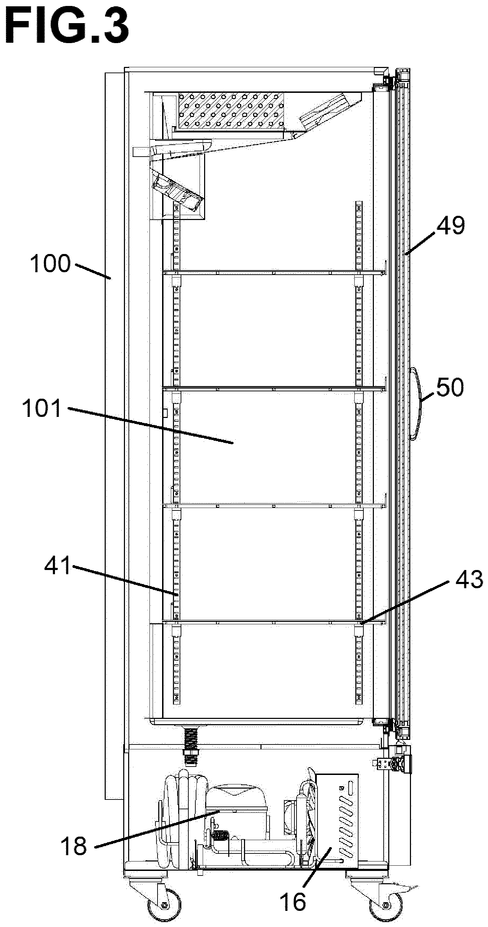

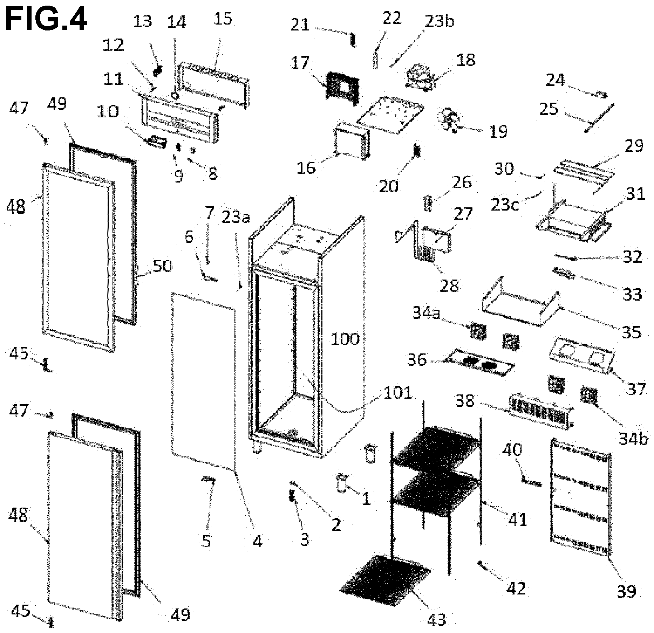

In a first practical embodiment, the compressor (18) will be located in the lower part of the frame (100), as shown in Figures 1 to 3. While said compressor (18) will be located in the upper part of the frame (100), as seen in the exploded view shown in Figures 4 and 7.

The method of using the machine for supercooling food and beverages at temperatures below zero degrees Celsius without crystallization, object of the present invention, is characterized in that it comprises:
A first step (1000) of calibration of the machine control software and setting of the basic operating parameters:
a) Setting of the setpoint (1100) or starting point, which will allow the machine to keep both the food and the liquid introduced in the cooling chamber (101) stable. This setpoint (1100) will depend on the type of product to be preserved. If several different products are combined, the starting point corresponding to the highest temperature will be chosen (-4 instead of -6°C, for example).
b) Setting of the differential (1200) or range of temperature variation both in ascent and descent, that is, the range of temperature fluctuation with which the slope change command will be given inside the cooling chamber (101) based on the starting point or "setpoint" (1100) set previously. In turn, said differential can shorten or extend the duration of the cycles carried out by the equipment based on the assigned programming value, as well as increase or decrease the time of influence of the air flow from the fans. Similarly, the differential depends on the type of product, and is generally between 0.3 and 6°C, both in ascent and descent.
c) Setting the time or period of oscillation in the differential. The machine will modify the temperature in the cooling chamber (101) between the two points, greater and lesser of the temperature variation range in that time. The period will depend on the product, but will be less than ten minutes, and preferably less than four minutes.

In addition, it is convenient to set some operating parameters of the fans or "Fan" (1300), which allow control from the percentage of flow that they emit or extract as the duration of operation, temperatures at which the connection and/or disconnection occurs, or how to act in case of safety shutdown. The parameters that are set within the calibration prevail over the regulation of the operating parameters of the fans when the absolute difference of the temperature in the cooling chamber (101) with the setpoint (1100) reaches the differential (1200). A practical example would be setting the maximum flow at 50% of the maximum operating capacity of the fans (34a, 34b), when reaching the differential (1200), they will be acted upon by applying more or less flow, but never above that 50% set.

It is also convenient to set the operating parameters of the probes (1400), among others, the parameters of temperatures of the evaporator (31) for starting and stopping the fans (34a, 34b), temperature and humidity percentage of the chamber of cooling (101), condenser temperature (16) for connection of the defrost resistor (29), calibration corrections, etc.

Finally, the defrost parameter or "defrost" (1500) can be set: that is, the intervals in which the equipment performs the defrosting, as well as the periods of duration of said intervals.

A second step (2000) of operation where, when the probes (23a, 23b, 23c), detect a temperature "X", higher than the starting point or setpoint (1100) set in the first step (1000), its differential is evaluated with the set-point (1100). If it is equal to or greater than the differential (1200), the starting command is given to the cooling system so that the cooling of the chamber (101) begins, so that the real temperature reached has a difference greater than the differential (1200). The power of the cooling system will depend on the ability of the cooling chamber (101) to reach the desired temperature changes in the set period.

If a colder temperature than the setpoint (1100) is obtained, it is calculated if the differential (1200) has been reached. If so, the logical control means incorporated in the software cause the compressor (18) to stop and, if necessary, keep working both the blower fan (34b) to continue lowering the temperature of the cooling chamber (101), and the extraction fan (34a) to discharge humidity if there is an excess inside the cooling chamber (101).

In this way, the temperature inside the cooling chamber (101) oscillates around the setpoint (1100) with an amplitude somewhat greater than the differential (1200) and a period of a few minutes. If the door is opened, the moment of oscillation can be modified to recover the temperature that has escaped therethrough.

If the differential (1200) is reduced, as with greater ambient air drying, meat matures more quickly.

Likewise, opening the door (48) will stop the fans (34a, 34b). After a while, a visual and/or acoustic alarm will be issued. If it is kept open even longer, the fans (34a, 34b) will be activated again to maintain the products at a preservation temperature.

In a practical embodiment, the use of the machine will be established for the preservation of food, prolonging its shelf life. For this, the differential (1200) used will be low, with a setting of the parameters of the fans (34a, 34b) in the order of 35% of power of use, with temperatures set at temperatures between -2.5°C and -4.5°C. And where a relative humidity will be established in this calibration not higher than 50%.

The duration cycles of the compressor since it starts and stops, until it starts again, can last up to 10 minutes. During these cycles, the extraction fans (34a) always start and cut off at the same time as the compressor (18) (provided that the activation temperature of the fans through the evaporator probe allows it by programming), while the blower ones (34b) remain connected for a longer time, in order to maintain the homogeneous temperature inside the cooling chamber (101). The operating time varies according to the readings that the probes (23a, 23c) take, and a program or programs regulate the operating times, depending on the humidity detected.

In a second practical embodiment, the use of the machine will be established for the maturation of meat and fish. For them, the differential (1200) used will be low, the action time of the fans (34a, 34b) is different, both the extraction ones (34a) and the blower ones (34b). In this second practical embodiment, the blower fans (34b) work beyond the cut-offs of the compressor (18), since for the maturation process it is necessary for the food to dry gradually, so the cut-off temperature of the evaporator (31) is also lowered at -10°C, so that when the compressor (18) cuts off, the blower fans (34b) continue to introduce cold and dry air into the cooling chamber (101).

In this case, the cycles do not usually exceed four minutes, since the temperature probes (23a, 23c) have a starting value of a low temperature. The relative humidity of the chamber is increased a little so that when the product matures with cold air, it does not burn, but without reaching a humidity value greater than 65% on average; because this would incur an excess of humidity in the food, so the food would not have dehydration and the maturation process would be affected, at the same time that it would be exposed to crystallization, due to the high humidity and the low temperatures.

In a third practical embodiment for use in other products, a higher flow of the fans (34a, 34b) is used, achieved with more fan action time, the differential (1200) is raised to almost three times the value used for food.

The temperature ranges oscillate ±4°C, the differential (1200) over the "setpoint" (1100) set in short periods of time, with which the temperature is lowered below the freezing point without crystallizing.

It is a calibration that, in the case of food, would freeze it in a period not exceeding one hour, due to the large fluctuation in temperature and the flow power it emits.

Example: This machine has been tested in the workshop, homogeneously arranging glass jars 16 cm high and with a square base of 10 cm on each side, filled with 1 litre of ethylene glycol. In the centre of the filling of each jar there is a temperature probe, and next to the jar a second air temperature probe. In the centre of each shelf of the cooling chamber there is an ambient humidity sensor and an anemometer.

Four shelves are arranged in the chamber, one shelf for each air outlet of the channelling device, slightly below (15 mm). The air temperature probes are located 30 mm from the outlet, and 70 mm above the shelf. The anemometer at 70 mm from the channelling device and 20 mm from the shelf. Each shelf has two jars, 50 mm from the channelizing device and from the edge of the corresponding chamber.

A test is carried out with a setpoint of -7°C, a differential of 1.1, and a cycle time of 149 seconds. The room is at 15°C, and the ambient humidity is 55%.

| Shelf | Value | Compressor OFF | | | | Compressor ON | | | |
|---|---|---|---|---|---|---|---|---|---|
| | | Liquid temperature (°C) | | Air temperature (°C) | | Liquid temperature (°C) | | Air temperature (°C) | |
| | | RIGH T | LEFT | RIGH T | LEFT | RIGH T | LEFT | RIGH T | LEFT |
| 1 | Minimu m | -7.1 | -6.8 | -11.2 | -10.1 | -7.1 | -6.8 | -10.6 | -9.5 |
| | Maxim um | -7.2 | -6.8 | -5.6 | -5.6 | -7.1 | -6.8 | -5.3 | -5.3 |
| 2 | Minimu m | -7.3 | -6.9 | -11.2 | -10.5 | -7.3 | -6.9 | -10.6 | -10 |
| | Maxim um | -7.3 | -6.9 | -5.9 | -6.2 | -7.3 | -6.9 | -5.6 | -5.9 |
| 3 | Minimu m | -6.9 | -6.7 | -10.3 | -9.5 | -6.9 | -6.7 | -9.8 | -9 |
| | Maxim um | -6.9 | -6.7 | -6.1 | -6.5 | -6.9 | -6.7 | -5.8 | -6.2 |
| 4 | Minimu m | -6.1 | -6.8 | -9.5 | -9.7 | -6.1 | -6.8 | -9 | -9.1 |
| | Maxim um | -6.1 | -6.8 | -5.9 | -6.6 | -6.1 | -6.8 | -5.6 | -6.3 |

| Shelf | Value | Air speed (m/s) | | Internal relative humidity (%) | |
|---|---|---|---|---|---|
| | | COMPR ESSOR ON | COMPR ESSOR OFF | COMPR ESSOR ON (lower) | COMPRE SSOR OFF (higher) |
| 1 | Minimu m | 0.63 | 0.55 | 31.2 | 90.6 |
| | Maxim um | 1.85 | 1.82 | | |
| 2 | Minimu m | 0.01 | 0.01 | | |
| | Maxim um | 0.76 | 0.75 | | |
| 3 | Minimu m | 0.01 | 0.01 | | |
| | Maxim um | 0.54 | 0.54 | | |
| 4 | Minimu m | 0.01 | 0.01 | | |
| | Maxim um | 0.62 | 0.56 | | |

It can be seen that the interior of the liquid in each jar has a temperature difference of at most 0.1°C between its maximum and its minimum, and 0.4°C between the hottest and the coldest jar. Therefore, the temperature peaks that cause the crystallization of products on the shelves have been avoided, the distribution of temperatures in the products being highly homogeneous, so that no shelf suffers from crystallization.

## Claims

1. Procedure for supercooling food or beverages at temperatures below zero degrees Celsius without crystallization in a cooling chamber (101) and by means of a cooling system comprising a condenser (16) and an evaporator (31), comprising the steps of:
defining a temperature setpoint (1100) below 0°C
defining a maximum differential (1200)
defining a temperature oscillation period
oscillating the temperature in the cooling chamber (101) around the setpoint (1100) with an amplitude equal to the differential (1200), with the defined oscillation period;
moving the interior air to the cooling chamber (101) during oscillation, with one or more extraction fans (34a), which move the cooling air to the condenser (16) and evaporator (31) and one or more blower fans (34b) that move the air inside the cooling chamber (101),
wherein the speed of the cooling air at every point of the cooling chamber (101), driven by the blower fans (34b), is defined between 0.2 and 2 m/s.

2. Procedure for supercooling food or beverages at temperatures below zero degrees Celsius without crystallization, according to claim 1, **characterized in that** the oscillation period is less than 8 minutes, preferably less than 4 minutes.

3. Procedure for supercooling food or beverages at temperatures below zero degrees Celsius without crystallization, according to claim 1, **characterized in that** the differential (1200) is between 0.3 and 6°C.

4. Machine for supercooling food or beverages at temperatures below zero degrees Celsius without crystallization in a cooling chamber (101), **characterized in that** it executes the procedure according to one of the preceding claims and comprises a cooling system comprising a condenser (16) and an evaporator (31); one or more extraction fans (34a), which move the cooling air to the condenser (16) and evaporator (31) and one or more blower fans (34b) that move the air inside the cooling chamber (101), and it is configured so that the speed of the cooling air at every point of the cooling chamber (101), driven by the blower fans (34b), is defined between 0.2 and 2 m/s.

5. Machine for supercooling food or beverages at temperatures below zero degrees Celsius without crystallization, according to claim 4, **characterized in that** it comprises:
an air channelling device (39) configured to uniformly distribute the temperature and circulating humidity inside the cooling chamber (101), arranged close to a wall of the cooling chamber (101) and with a series of perforations arranged above of each shelf of the cooling chamber (101), with the perforations on one side having a larger section than the ones on the other side for each shelf.

6. Machine for supercooling food or beverages at temperatures below zero degrees Celsius without crystallization, according to claim 5, **characterized in that** the blower fans (34b) are in the upper part and the side with the largest perforation section of the air channelling device (39) in each shelf is bigger the further it is from the blower fans (34b).

7. Machine for supercooling food or beverages at temperatures below zero degrees Celsius without crystallization, according to claim 4, **characterized in that** the coolant gas is propane.

8. Machine for supercooling food or beverages at temperatures below zero degrees Celsius without crystallization, according to claim 4, **characterized in that** it comprises a glass door (48) with triple glazing.
